# EUROPEAN PATENT SPECIFICATION

(11) **EP 2 755 495 B1**
(45) Date of publication and mention of the grant of the patent: **09.09.2015**
(21) Application number: 12770434.4
(22) Date of filing: 13.09.2012
(51) Int. Cl.: A23G 9/00, A23G 9/04, A23G 9/08, A23G 9/14, A23G 9/22, A23G 9/28, A23G 9/30

(54) **APPARATUS FOR PREPARING REFRIGERATED PRODUCTS**
VORRICHTUNG ZUR HERSTELLUNG VON GEKÜHLTEN PRODUKTEN
APPAREIL DE PRÉPARATION DE PRODUITS RÉFRIGÉRÉS

(30) Priority: 15.09.2011 IT BO20110069 U
(43) Date of publication of application: 23.07.2014
(73) Proprietor: S.P.M. DRINK SYSTEMS S.p.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/067934
(87) International publication number: WO 2013/037884

(56) References cited:
- WO-A1-2012/160103
- GB-A- 2 230 057

## Description

### Technical Field

The present invention regards an apparatus for preparing and dispensing refrigerated products, such as for example creamy ice-creams and the like.

### Background Art

Nowadays apparatuses which allow to prepare and dispense refrigerated products of the type of ice-creams, water ice and the like are known.

Such known apparatuses are generally constituted by a tank suitable to contain the product to be prepared and dispensed, wherein a cooling device for cooling the product to the appropriated temperature and a mixing device which causes the continuous circulation of the product inside the tank are arranged. The circulation device, for example consisting of a screw member driven in rotation according to an axis longitudinal to the tank, is suitable to convey the cooled product towards a front zone, where a dispensing device for the product is arranged. The dispensing device is provided with an obturator element which can be operated by means of an external lever member, for allowing the dispensing of single doses of product, for example to a small cup.

Patent application BO2011A000298 and WO 2012/160103 in the name of the Applicant disclose an apparatus suitable for filling containers such as common tubs provided by ice-cream parlours to consumers in different sizes, for containing predetermined quantities of ice- cream. Such apparatus comprises, at the front zone of the containment tank, a dispensing device for the product comprising a conveying member of tubular shape applied axially to said tank and having an outlet opening turned outwards.

A need which outcomes when using such apparatus is that of being able to constrain in a fast and safe way the above mentioned dispensing device to the body of the containment tank, allowing its easy removal when it is required. Such removal is required for example for completing the periodic cleaning and maintenance operations inside the tank.

### Disclosure

The task of the present invention is that of solving the aforementioned problem, devising an apparatus for preparing refrigerated products which enables to constrain in a fast and safe manner the dispensing device for the product to the containment tank body, allowing at the same time an easy removal of the same dispensing device.

Another scope of the present invention is that of providing an apparatus for preparing refrigerated products having a simple conception, a securely reliable functioning and versatile use, as well as relatively economic cost.

The cited scopes are attained, according to the present invention, by the apparatus for preparing refrigerated products according to claim 1.

According to the present invention, the apparatus for preparing refrigerated products comprises a conveying member axially applied in a removable manner to the containment tank for the product to be prepared, communicating with the front zone of such tank, through a couple of hooking members articulated peripherally to the same conveying member and suitable to engage respective hooking seats obtained externally to said tank.

### Description of Drawings

Details of the invention shall be more apparent from the detailed description of a preferred embodiment of the apparatus for preparing refrigerated products according to the invention, illustrated for indicative purposes in the attached drawings, wherein:

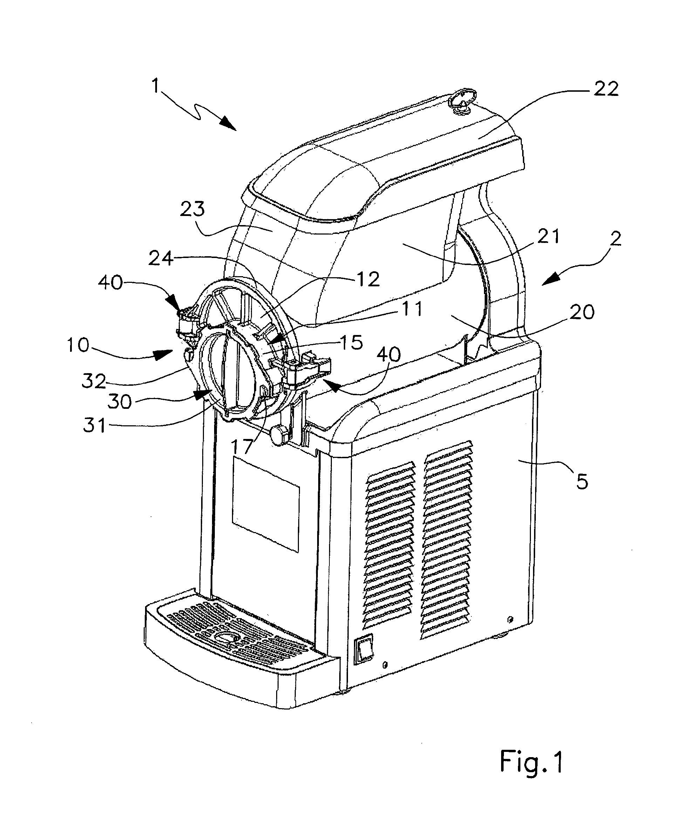

figure 1 shows a perspective view of the apparatus for preparing refrigerated products;
figure 2 shows a perspective view of the dispensing device for the product.

### Best Mode

With particular reference to such figures, the apparatus for preparing and dispensing refrigerated products such as creamy ice-creams, sorbets and the like according to the invention is indicated in its entirety with 1.

The apparatus 1 comprises a tank 2 for containing the product to be dispensed. Inside the containment tank 2 a mixing device is arranged, in known way, comprising a screw member driven in rotation according to an axis longitudinal to said tank 2 for performing the continuous circulation of the product inside the same tank 2. Moreover inside the tank 2 a cooling device, known per se as well, is arranged for cooling the product at the suitable temperature.

The containment tank 2 is mounted above a base body 5 of substantially prism-shaped profile. The base body 5 is suitable to contain in its inside the actuation members of the apparatus, known per se and not described in more detail.

The containment tank 2 is preferably made by a single mouldable piece of transparent plastic material and has a lower portion 20 having the shape of a cylindrical sector which extends along a substantially horizontal axis and an upper portion 21 which extends from said cylindrical portion 20; in the lower cylindrical portion 20 the cited screw member is coaxially housed, constituting the mixing device which performs the continuous circulation of the product inside the tank 2. The upper portion 21 of the tank 2 is provided in known way with an upper opening suitable to be closed by a lid 22. The upper portion 21 of the tank 2 frontally has as well a front wall 23 inclined towards the inside of the same tank, for leading towards the rear zone the product which has interacted with the mixing device, so as to avoid stagnation of the product in the upper corner of the tank. Above said inclined wall 23, the lid 22 is provided with a curved portion which is an extension of the same inclined wall 23 of the tank, for allowing the product to change its direction in a gradual manner.

The cylindrical portion 20 of the containment tank 2 is frontally open and shapes a flange 24 along the peripherical rim for the hooking of a dispensing device 10 of the product.

The dispensing device 10 comprises a conveying member 11 of tubular shape applied axially to the cylindrical portion 20 of the tank 2 and extending outwards of the same tank 2. The conveying member 11 extends from a base plate 12 having substantially the same external profile of the flange 24 of the containment tank 2.

The conveying member 11 shapes an outlet opening 15 turned outwards for dispensing the product. The dispensing opening 15 has a circular profile and is substantially arranged coaxially to the cylindrical portion 20 of the containment tank 2. Suitably the circular profile of the dispensing opening 15 is tangent to the circular profile of the cylindrical portion 20 of the containment tank 2 at the lower generatrix of the same cylindrical portion 20 of the tank. The dispensing opening 15 has a diametrical size similar to that of the cylindrical portion 20 of the tank 2.

The dispensing opening 15 is provided with a closure lid 30 which is removable for dispensing the product towards a container placed below. The lid 30 is inserted, through a peripheral rim 31, in a seat defined by the dispensing opening. From the peripheral rim 31 of the lid 30 a couple of hooking members 32, in diametrically opposed positions, protrudes outwards, being suitable to couple in a fast way with correspondent pegs 17 shaped by the conveying member 11 at the edge of the dispensing opening 15.

According to the present invention, the conveying member 11 is applied in a removable way axially to the cylindrical portion 20 of the containment tank 2 through a couple of hooking members 40 articulated peripherally to the same conveying member 11 and suitable to engage respective hooking seats 41 obtained externally to said tank 2. Suitably the hooking members 40 are arranged in diametrically opposed positions with respect to the conveying member 11.

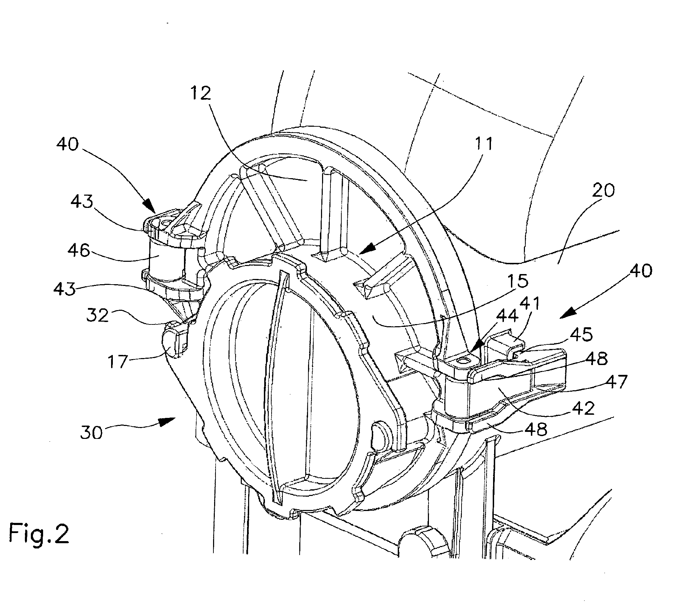

More precisely, as better shown in figure 2, the hooking members 40 respectively comprise a lever 42, made of plastic material, which is articulated at a first end between the counter-faced prongs 43 of a fork 44 shaped by the conveying member 11, and has at the opposed end a tooth 45 suitable to elastically engage the above mentioned hooking seat 41. The lever 42 extends from a sleeve 46 in which the articulation pin to the prongs 43 of the fork 44 is slidably inserted. The lever 42 is partially surrounded, along the longitudinal sides, by edges 47 which extend from the second end of the same lever. From such edges 47 a couple of longitudinal tongues 48 extends protruding from the lever 42, for blocking the hooking members in the closed position.

The functioning of the apparatus for preparing refrigerated products, such as creamy ice creams, sorbets and the like, is easy to understand from the preceding description.

After introducing the product in the tank 2, through the upper opening of the tank 2, the preparing cycle for an ice-cream is started in known manner.

When it is required, the dispensing of the product is performed through the dispensing device 10. For this purpose, after stopping the rotation of the mixing device, the lid 30 which closes the dispensing opening 15 of the conveying member 11 is removed. At such point, by restarting the mixing device, the product flows through the conveying member 11 of the dispensing device 10. The product which comes out from the dispensing opening 15 is collected in the appropriate container arranged below the same dispensing opening 15.

When it is necessary to remove the dispensing device 10, for example for performing the cleaning and maintaining operations inside the containment tank 2, the hooking members 40 which constrain the same dispensing device 10 to the tank body 2 are unhooked. Such unhooking is obtained by turning the lever 42 of the hooking members 40 so as to extract the tooth 45 from the relative hooking seat 41.

It is to be observed that, in the unhooking step, the external longitudinal tongues 48 of the hooking members 40 oppose suitable resistance, until their flexure unblocks the mechanism and allows the removal of the dispensing device 10.

Therefore the apparatus object of the invention attains the scope of allowing to constrain in a fast and safe way the dispensing device for the product to the containment tank body.

Such result is obtained in particular thanks to the use of hooking members 40 articulated peripherally to the conveying member 11 of the dispensing device and suitable to engage respective hooking seats 41 obtained externally to the tank 2. The hooking and the unhooking of the hooking members 40 is in fact easy and fast, being obtained through the simple rotation of the levers 42.

The apparatus described for indicative purpose is susceptible of numerous modifications and variants according to the different requirements.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing refrigerated products, comprising a containment tank (2) suitable to contain the product to be prepared; a mixing device arranged inside said tank (2) and suitable to perform the continuous circulation of the product inside the same tank (2), for conveying the product towards a front zone of said tank (2); a cooling device placed inside said tank (2) for cooling said product; a dispensing device (10) for the product, placed at said front zone of the containment tank (2), comprising a conveying member (11) applied axially to said tank (2), communicating with said front zone of the tank (2), and having an outlet opening (15) turned outwards, and a lid (30) for closing said outlet opening (15) of the conveying member (11) which is removable for the fast dispensing of the product towards a container placed below, **characterized in that** said conveying member (11) is applied in removable manner to said tank (2) through at least one couple of hooking members (40) articulated peripherally to the same conveying member (11) and suitable to engage respective hooking seats (41) obtained externally from said tank (2).

2. Apparatus according to claim 1, **characterized in that** said hooking members (40) are arranged in diametrically opposed positions with respect to said conveying member (11).

3. Apparatus according to claim 1 or 2, **characterized in that** said hooking members (40) respectively comprise a lever (42) which is articulated at a first end among the counter-faced prongs (43) of a fork (44) shaped by said conveying member (11) and having at the opposed end a tooth (45) suitable to elastically engage said hooking seat (41).

4. Apparatus according to claim 3, **characterized in that** said hooking members (40) respectively comprise a couple of longitudinal tongues (48) which extend externally to said lever (42), starting from its free end, and which are suitable to block the same hooking members (40) in the closed position.

5. Apparatus according to claim 4, **characterized in that** said couple of longitudinal tongues (48) extends from edges (47) which surround at least partially said lever (42), along its longitudinal sides.

## Patentansprüche

1. Vorrichtung zur Herstellung gekühlter Produkte, umfassend die einen Aufbewahrungstank (2), der dafür geeignet ist, das herzustellende Produkt zu enthalten, eine Mischeinrichtung (3), die im Inneren des Tanks (2) angeordnet und dafür geeignet ist, die kontinuierliche Umwälzung des Produkts im Inneren des Tanks (2) auszuführen und das Produkt hin zu einem vorderen Bereich des Tanks (2) zu befördern, eine Kühleinrichtung, die im Inneren des Tanks (2) angeordnet ist, um das Produkt zu kühlen, eine Ausgabeeinrichtung (10) für das Produkt, die am vorderen Bereich des Aufbewahrungstanks (2) angeordnet ist und ein Förderelement (11) umfasst, das axial am Tank (2) angebracht ist, mit dem vorderen Bereich des Tanks (2) in Verbindung steht und eine nach außen gerichtete Auslassöffnung (15) aufweist, sowie einen Deckel (30) zum Verschließen der Auslassöffnung (15) des Förderelements (11), der für das schnelle Ausgeben des Produkts in einen darunter angeordneten Behälter abnehmbar ist,
**dadurch gekennzeichnet, dass** das Fördermittel (11) durch mindestens ein Paar Hakenelemente (40), das in abnehmbarer Weise am Außenumfang des Fördermittels (11) angelenkt ist, am Tank (2) angebracht ist, wobei das Paar Hakenelemente dafür geeignet ist, mit entsprechenden Hakensitzen (41) in Eingriff zu gelangen, die außen am Tank (2) vorhanden sind.

2. Vorrichtung nach Anspruch 1, **dadurch gekennzeichnet, dass** die Hakenelemente (40) im Verhältnis zum Fördermittel (11) in diametral gegenüberliegenden Positionen angeordnet sind.

3. Vorrichtung nach Anspruch 1 oder 2, **dadurch gekennzeichnet, dass** die Hakenelemente (40) jeweils einen Hebel (42) umfassen, der mit einem ersten Ende zwischen den gegenüberliegenden Zinken (43) einer Gabel (44) angelenkt ist, die durch das Förderelement (11) gebildet ist, und am gegenüberliegenden Ende einen Zahn (45) aufweist, der geeignet ist, elastisch mit dem Hakensitz (41) in Eingriff zu gelangen.

4. Vorrichtung nach Anspruch 3, **dadurch gekennzeichnet, dass** die Hakenelemente (40) jeweils ein Paar länglicher Zungen (48) umfassen, die sich, beginnend am freien des Hebels (42), außerhalb desselben erstrecken und geeignet sind, die Hakenelemente (40) in der geschlossenen Position zu arretieren.

5. Vorrichtung nach Anspruch 4, **dadurch gekennzeichnet, dass** sich das Paar länglicher Zungen (48) von Rändern (47) aus erstreckt, die den Hebel an seinen Längsseiten zumindest teilweise umgeben.

## Revendications

1. Equipement pour la préparation de produits réfrigérés, comprenant un réservoir conteneur (2) adapté pour contenir le produit à préparer ; un dispositif de mélange disposé à l'intérieur dudit réservoir (2) et adapté pour provoquer la circulation continue du produit à l'intérieur du réservoir (2) lui-même, pour transporter le produit vers une zone frontale dudit réservoir (2) ; un dispositif de refroidissement disposé à l'intérieur dudit réservoir (2) pour refroidir ledit produit ; un dispositif distributeur (10) du produit, placé en correspondance de ladite zone frontale du réservoir conteneur (2), comprenant un organe convoyeur (11) appliqué dans l'axe dudit réservoir (2), en communication avec ladite zone frontale du réservoir (2), et présentant une embouchure de sortie (15) orientée vers l'extérieur, et un couvercle (30) de fermeture de ladite embouchure de sortie (15) de l'organe convoyeur (11) qui est amovible pour la distribution rapide du produit dans un récipient situé au-dessous, **caractérisé en ce que** ledit organe convoyeur (11) est appliqué de manière amovible audit réservoir (2) au moyen d'au moins une paire d'organes d'accrochage (40) articulés de manière périphérique à ce même organe convoyeur (11) et adaptés pour engager des sièges d'accrochage respectifs (41) ménagés à l'extérieur dudit réservoir (2).

2. Equipement selon la revendication 1, **caractérisé en ce que** lesdits organes d'accrochage (40) sont disposés dans des positions diamétralement opposées par rapport audit organe convoyeur (11).

3. Equipement selon la revendication 1 ou 2, **caractérisé en ce que** lesdits organes d'accrochage (40) comportent respectivement un levier (42) qui est articulé à une première extrémité entre les fourchons (43) opposés d'une fourche (44) profilée par ledit organe convoyeur (11) et présente à l'extrémité opposée une dent (45) adaptée pour engager élastiquement ledit siège d'accrochage (41).

4. Equipement selon la revendication 3, **caractérisé en ce que** lesdits organes d'accrochage (40) comportent respectivement une paire de languettes longitudinales (48) qui s'étendent extérieurement audit levier (42), à partir de l'extrémité libre, et sont adaptées pour bloquer ces mêmes organes d'accrochage (40) dans la position de fermeture.

5. Equipement selon la revendication 4, **caractérisé en ce que** ladite paire de languettes longitudinales (48) s'étend à partir de bords (47) qui entourent au moins partiellement, le long des côtés longitudinaux, ledit levier (42).
